# EUROPEAN PATENT SPECIFICATION

(11) **EP 2 075 442 B1**
(45) Date of publication and mention of the grant of the patent: **05.09.2012**
(21) Application number: 07425842.7
(22) Date of filing: 31.12.2007
(51) Int. Cl.: F02D 35/02, F02D 41/30, F02D 41/40, F02B 1/12

(54) **Closed-loop electronic combustion control system for a diesel engine operating with premixed charge compression ignition**
Elektronisches Verbrennungssteuerungssystem mit geschlossenem Regelkreis für einen Dieselmotor mit Kompressionszündung mit Kraftstoffluftvormischung
Système de contrôle de combustion électronique en boucle fermée pour moteur diesel fonctionnant avec un allumage de compression de charge prémélangée

(43) Date of publication of application: 01.07.2009
(73) Proprietor: C.R.F. Società Consortile per Azioni, 10043 Orbassano (Torino) (IT)
(72) Inventor: Tonetti, Marco, 10043 Orbassano (IT); Pelassa, Michele, 10043 Orbassano (IT)
(74) Representative: Bergadano, Mirko

(56) References cited:
- EP-A- 1 424 481
- EP-A- 1 607 609
- DE-A1- 10 344 423
- DE-A1- 10 344 427
- DE-A1-102005 058 820
- US-B1- 6 276 334

## Description

The present invention concerns a closed-loop electronic combustion control system for a diesel engine operating with Premixed Charge Compression Ignition (PCCI).

Research into premixed charge compression ignition is of great interest in the diesel engine field, as this new technique is intended to improve the combustion techniques traditionally used in the diesel engine field.

As is known, combustion in diesel engines is governed by the law of injection, that is to say by controlling the timing and quantity of fuel injected into the combustion chamber in order to vary the ignition delay and the quantity of fuel that accumulates in the combustion chamber before combustion starts.

Traditionally, it is possible to point out four distinct phases of diesel combustion:
- a first phase, known as ignition delay, starting when fuel starts to enter the combustion chamber and ending when combustion starts,
- a second phase, known as premixed combustion, in which there is rapid combustion propagation throughout the entire premixed fuel charge that has accumulated during the ignition delay phase,
- a third phase, known as diffusion combustion, in which combustion is governed by diffusion processes and concerns the central core of the jet of fuel injected into the combustion chamber when combustion has already begun, allowing gradual control in the release of heat through injection control, and
- a fourth phase, known as completion of combustion, in which injection ends and combustion of the previously injected fuel is completed.

The premixed combustion and diffusion combustion phases are the ones that characterize diesel engine performance the most.

In detail, the premixed combustion phase is characterized by efficient utilization of the oxygen present in the combustion chamber, with consequent combustion that is complete and smoke-free. On the other hand, the premixed combustion phase is responsible for combustion noise.

The diffusion combustion phase is instead characterized by high temperatures, low ignition delays and, consequently, low levels of mixing.

These characteristics prevent part of the fuel from starting or completing combustion reactions because of the lack of oxygen with which to react, due to the low mixing level, but at the same time this part is strongly heated by the heat produced from combustion in the chamber, resulting in the formation of solid particles in the form of soot. At the same time, low mixing is responsible for greater production of nitrous oxides (NOx), as it gives rise to the formation of zones in the combustion chamber where combustion is greater and which remain at high temperatures for longer periods (so-called hot spots), where it is easier for nitrous oxides (NOx) to form.

Therefore, the diffusion combustion phase is characterized by progressive heat release, by the generation of low-pressure gradients, and consequently low combustion noise, but is also responsible for a large part of the smoke and nitrous oxide emissions.

By being able to vary the quantity of fuel accumulated and premixed by use of the pilot injection, conventional combustion in modern common-rail diesel engines is thus
characterized by a compromise between emissions and combustion noise that, once defined in the design stage, must be as repeatable and reliable as possible, cylinder by cylinder, throughout the entire life of the engine.

PCCI combustion arises from the idea of premixing the fuel and gas present in the combustion chamber in a complete or, in any case, a highly mixed manner before combustion starts, ideally tending towards the combustion of a homogeneous mixture and eliminating the drawbacks of diffusion combustion, namely the emission of smoke and nitrous oxides.

On the other hand, PCCI combustion is only possible if the ignition delays are greater than the duration of the injection event (or events), so as to allow optimal premixing before regular combustion starts. These ignition delays cause decoupling of the start of combustion from injection, making direct control of the start of combustion and its position with respect to the engine cycle difficult.

In addition, PCCI combustion can only be usefully embodied if it is possible to control the heat release of the mass of premixed fuel at the moment of ignition, so as to avoid damage to mechanical members and simultaneously limit combustion noise.

The problem of heat release control is mainly entrusted to Exhaust Gas Recirculation (EGR) in the combustion chamber, which is able to both decrease the volumetric percentage of oxygen in the chamber and lower the mixture temperature, thereby allowing combustion to be slowed down. However, with the adoption of premixed combustion, this operation increases the risk of misfires, helping to increase potential combustion instability.

In order to limit the risks of instability to which PCCI combustion engines are subject and to improve performance, good control of PCCI combustion thus becomes a vital necessity.

American patent applications US20020007816, US6637404, US6142119, US20030230276, and US20020011240 are examples of documents that provide direct control of combustion.

Documents are also present in literature that describe combustion control systems based on the use of multiple injection applied to diesel engines operating with premixed charge compression ignition, in order to achieve closed-loop control of the characteristic quantities of combustion and model the shape of the heat release rate (HRR).

For example, EP1607609 describes the use of a first injection of fuel, also known as pilot injection, followed by the main injection. If the time lag between the main injection and the pilot one is sufficiently small, and in the presence of a chamber environment (pressure, temperature and mixture composition) capable of ensuring sufficient ignition delays, it is possible to premix the quantities of fuel injected in the combustion chamber by the two injections, obtaining similar emissions and consumption to those achievable in the presence of a sole premixed charge injection, yet having a certain number of degrees of freedom for shaping the heat release rate profile. In particular, EP1607609 proposes acting on the following quantities: the time lag Tp-m between the two injections and the quantity Qp of fuel injected during pilot injection. By modifying Tp-m and Qp, it is possible to achieve closed-loop control of quantities of primary importance for engine operation, such as the position of the combustion centroid, the maximum derivative of the pressure curve in the combustion chamber during the engine cycle, etc.; in other words, control of the position of combustion, to which consumption, premixing level, Nox emissions and combustion noise, or rather the noise pollution produced by the engine, are related.

It should be noted that the quantities upon which EP1607609 suggests taking action are easy to regulate, cycle by cycle and cylinder by cylinder, by making use of modern common-rail injection systems. This simplicity of control renders the above-mentioned quantities particularly attractive for use in a closed loop able to modify these same quantities at each engine cycle and in each cylinder.

More in detail, the teachings contained in EP1607609 describe the simultaneous control of the position of the combustion centroid and of the maximum HRR peak by means of varying the time lag Tp-m. In practice, since Tp-m affects the position of the combustion centroid and the maximum HRR peak at the same time, the closed-loop control system described in EP1607609 and based on the Tp-m itself, is only able to control one quantity, chosen from the combustion centroid and combustion noise.

Therefore, this methodology does not lend itself to a
simultaneous and independent control of the combustion centroid and combustion noise. Furthermore, EP1607609 clearly states that the proposed methodology can only be used for small changes in the position of combustion, since the dependence on Tp-m is monotonic (decreasing) only for the HRR peak, whilst having a minimum with regard to combustion noise reduction. Once the optimal Tp-m value is exceeded, combustion noise starts to increase again, because the further increase in time between the injections contributes to an increase in combustion noise, caused by the fact that the pilot combustion itself becomes the noise source.

Similarly, EP1607609 also describes a control mechanism for the position of the combustion centroid based on varying the quantity of fuel Qp injected into the combustion chamber with the pilot injection. This variation is made whilst keeping the timing of the main injection, as well as the total quantity of fuel, intended as the sum of the fuel injected into the combustion chamber during pilot injection and main injection, fixed. Under these conditions, for a given HRR peak and therefore for a given combustion noise, varying the quantity of fuel Qp achieves a corresponding displacement of the combustion centroid. Clearly, this control methodology is not able to affect the HRR peak, nor, in consequence, any quantity associated with it, including combustion noise. It can be concluded that neither does the above control methodology described in EP1607609 allow the simultaneous and independent control of the combustion centroid and combustion noise.

DE 10 2005 058820 A1 discloses a method for controlling an internal combustion engine, in particular a compression-ignition internal combustion engine, wherein at least one variable is formed on a cylinder-specific basis, which variable characterizes a respective combustion profile in an associated combustion chamber, and the control of cylinder-specific fuel injection parameters is influenced on the basis of the at least one variable which characterizes the combustion profile.

The present invention intends to overcome, at least in part, the drawbacks of known art. More in detail, the present invention intends to fill the gaps of the control methodologies described in EP1607609, namely to control the combustion centroid and combustion noise in a simultaneous and independent manner, so as to facilitate and optimize the control of an engine operating with premixed combustion.

The previous object is achieved by the present invention making use of the pilot injection as a degree of freedom on which to act to modify the shape of the HRR profile without varying the total premixing level.

More in detail, the present invention concerns an electronic control system configured to closed-loop control fuel combustion in a premixed charge compression ignition (PCCI) diesel engine equipped with an electronically controlled fuel injection system, as claimed in claim 1.

The invention shall now be described with particular reference to the enclosed figures, which represent a preferred, non-limitative embodiment, where:
- Figures 1a, 1b, 1c, 2a, 2b and 2c show quantities controlled by the system according to known art;
- Figure 3 shows the dependence of HRR on the pilot quantity within the context of the present invention;
- Figures 4a and 4b show the results of experimental tests carried out in the presence of medium to low loads;
- Figures 5a and 5b show the results of experimental tests carried out in the presence of medium to high loads;
- Figure 6 shows the controllable range of the timing position of the injection sequence (pilot injection and main injection), and
- Figure 7 schematically shows a closed-loop electronic premixed combustion control system embodied according to the principles of the present invention.

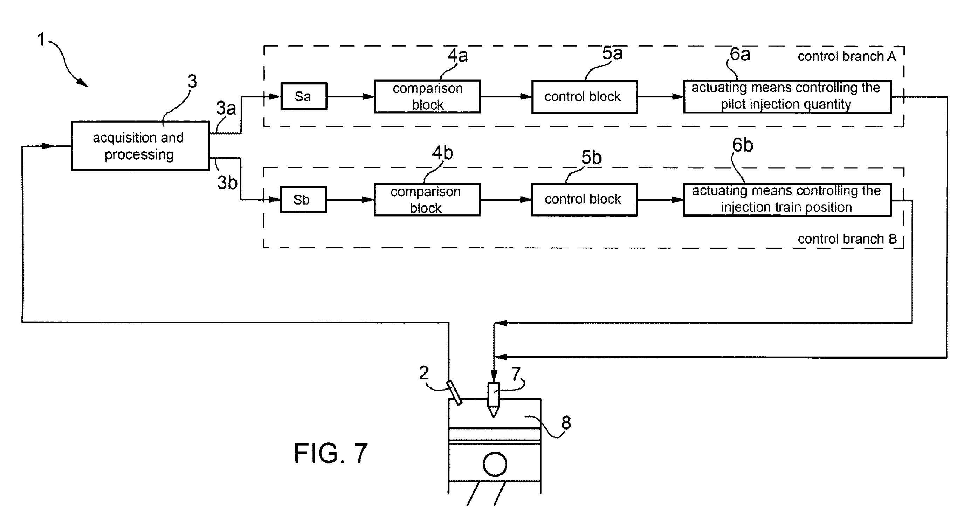

In Figure 7, a closed-loop electronic combustion control system for a diesel engine operating with premixed charge compression ignition is indicated, as a whole, by reference numeral 1.

In particular, the system 1 comprises a plurality of sensors 2 able to measure and/or calculate some characteristic quantities of the fuel combustion process, for example, the moment combustion begins, the centroid of the combustion process, the maximum derivative of the pressure cycle, the noise emitted during the combustion cycle, etc.

The sensors 2 can be physical sensors able to measure these quantities directly or virtual sensors able to extrapolate the quantities by means of mathematical calculations based on various input data.

For example, in the absence of a specific combustion noise sensor, this quantity can be measured starting from the internal cylinder pressure signal, calculating the derivative in function of the crank angle and exploiting the direct proportionality existing between combustion noise and the maximum derivative of the pressure cycle.

To be more specific, the term "combustion centroid" is intended as a characteristic quantity of the position of the combustion with respect to the engine cycle, namely a characteristic quantity of the position of the HRR curve in the engine cycle, whether it be calculated as the crank angle at which a predetermined fraction of the mass of fuel injected into the combustion chamber has been burnt, generally 50% (50% Mass Fraction Burned - MFB50%), or as the mathematical centroid of the HRR curve as a function of crank angle. For the purposes of embodying the present invention, the previous definitions, or other definitions present in literature and known to a person skilled in the art, can be used indifferently. Furthermore, since the concept of "combustion centroid" is intrinsically correlated to the function that expresses HRR during the engine cycle, and therefore the combustion during the engine cycle, the expression "combustion centroid" is also used in following as an equivalent expression for "position of the combustion", or "position of the centroid of combustion".

Similarly, in the present document, the term "combustion noise" identifies the physical phenomenon of noise generated during the combustion process, the measurement of which is expressed in terms of characteristic quantities such as Combustion Noise (CN), or the maximum derivative of the pressure cycle, or the maximum HRR peak, or any other quantity known to a person skilled in the art and indicative of the combustion noise.

The sensors 2 produce output signals that are subsequently handled by a data acquisition and processing block 3.

In particular, this data acquisition and processing block 3 has a first and a second output 3a and 3b on which values representing the respective characteristic quantities Sa and Sb of combustion noise and combustion centroid are present.

In particular, quantities Sa and Sb are closed-loop controlled in accordance with the present invention.

The outputs 3a and 3b communicate with the respective inputs of comparison blocks 4a and 4b, in which the values of quantities Sa and Sb are compared with the respective reference values.

The comparison blocks 4a and 4b have outputs via which error signals, generated by the comparison blocks 4a and 4b themselves, are supplied to the respective inputs of a control block 5a and a control block 5b. The control blocks 5a and 5b implement control strategies (for example, proportional, integrative or derivative control) of known type and therefore not described any further.

In particular, blocks 5a and 5b have outputs feeding pilot signals for the respective actuators 6a and 6b, able to respectively regulate the quantity of fuel injected by an injection system 7 (shown schematically) into the combustion chambers 8 via pilot injection and the timing position of the injection sequence.

The injection system 7 is preferably of the common rail type and able to inject two or more injections of fuel inside the combustion chamber 8 of each cylinder per engine cycle.

In particular, the injection system 7 is able to perform at least a first injection or pilot injection P (which is the first injection of fuel in the engine cycle) feeding a small quantity of fuel Qp, followed in time by a second injection or main injection M feeding a larger quantity of fuel Qm.

Once the quantities Sa and Sb have been determined by means of the sensors 2 and the acquisition and processing block 3, the control system 1 operates on every engine cycle, and for each cylinder, to make the measured quantities converge to the respective reference values.

In practice, the control system 1 provides for the use of two controllers that work in parallel, so as to respectively guarantee the desired combustion noise value and the position of the combustion centroid, mapped as a function of engine Revolutions Per Minute (RPM) and load for example. In this way, the values for combustion noise and the combustion centroid are regulated independently of variations in environmental conditions, the type of fuel, the driver's driving style and all the parameters that could disturb the controlled quantities.

The closed-loop controls operate by simultaneously and independently regulating the following parameters:
a) the timing position of the injection sequence with respect to the engine cycle, and
b) the quantity of fuel Qp injected by the pilot injection P.

The quantity of fuel Qp injected by the pilot injection P may, for example, be regulated by performing a preset number of successive injector opening cycles. It is obvious that the quantity of fuel Qp injected increases with an increase in the number of injector opening cycles.

In the example of embodiment, at each variation in the quantity of fuel Qp fed with the pilot injection P there is a consequent variation in the quantity of fuel Qm fed with the main injection M in order to keep the total quantity of fuel (Qp+Qm) injected by the two successive injections P and M constant, i.e. to keep the torque developed by the engine constant and equal to the desired value.

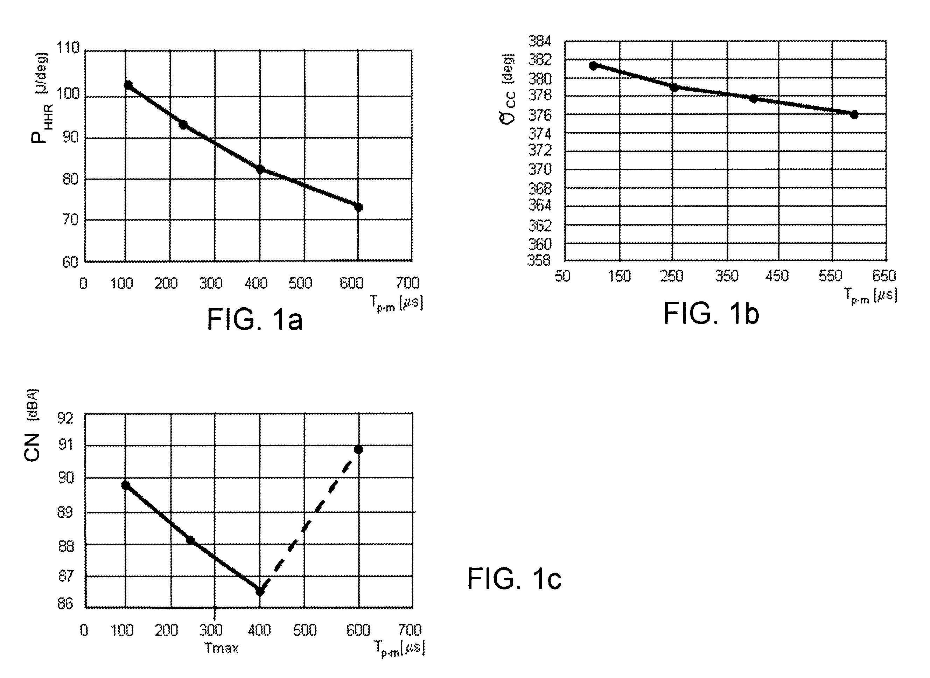

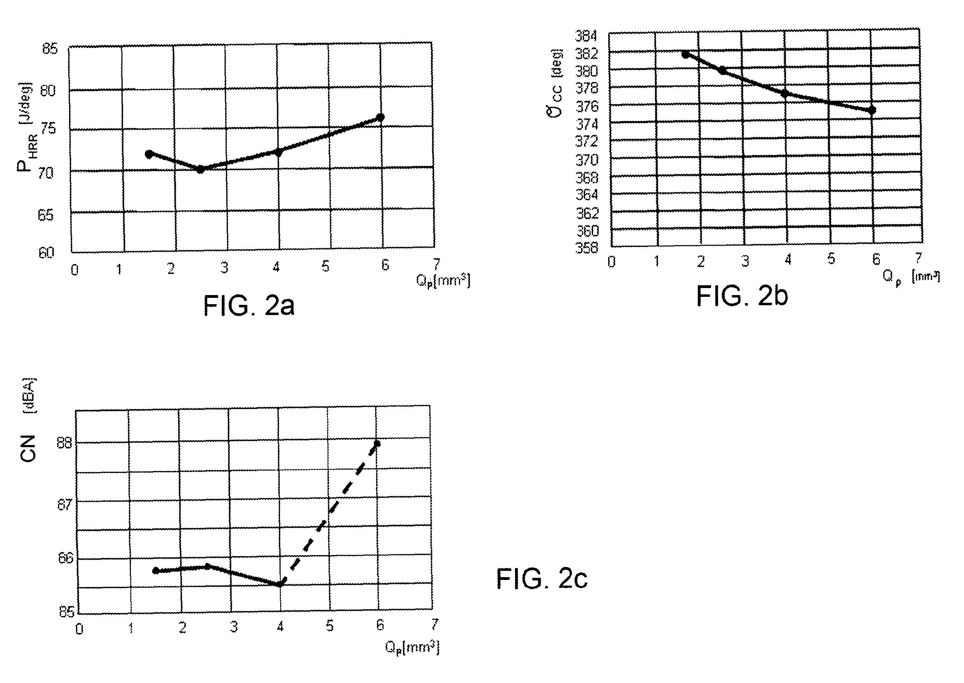

Based on the experimental data collected by the Applicant and shown in the graphs provided in Figures 1a, 1b, 1c, 2a, 2b and 2c, it can be observed how the heat release profile is altered following modification in the time lag Tp-m between the pilot injection P and the main injection M (Figures 1a, 1b and 1c) or in the quantity of fuel Qp injected by the pilot injection P (Figures 2a, 2b and 2c). In particular, as the time lag Tp-m increases, the value of the heat release rate (HRR) peak, shown in Figure 1a and indicated as P_{HRR}, drops in a monotonic manner, while the angle of the combustion centroid, shown in Figure 1b and indicated as θ_{CC}, moves in time towards smaller angular values with respect to the reference point constituted by top dead centre TDC. The reduction in heat release rate peak results in a drop in the pressure gradient and, in consequence, produces a reduction in combustion noise, shown in Figure 1c and indicated as CN, which drops as Tp-m increases until a minimum is reached, after which the noise starts to increase again, as the pilot combustion becomes the noise source.

Based on further experimental measurements made by the Applicant and shown by way of example in Figures 2a, 2b and 2c, it can be noted how, for a given overall quantity of fuel injected in the injection sequence, modification of the quantity of fuel Qp injected during pilot injection affects the position of the combustion centroid.

In particular, as Qp increases, displacement of the combustion centroid to smaller angular values with respect to a reference consisting of top dead centre TDC (Figure 2b) occurs, while the value of the heat release rate peak (Figure 2a) does not change in an appreciable manner, resulting in a substantially null affect on combustion noise, at least for a certain set of Qp values (Figure 2c).

Thus, it can be noted how the simple regulation of the quantity of fuel Qp injected by the pilot injection P lends itself to controlling the combustion centroid, while it is of scarce or null effectiveness in controlling combustion noise.

Subsequently, further experimental tests have shown how it is possible to obtain a decrease in HRR peak, and a consequent drop in combustion noise, by also acting on the quantity of fuel Qp injected during pilot injection, provided that the combustion centroid is kept at a substantially constant value.

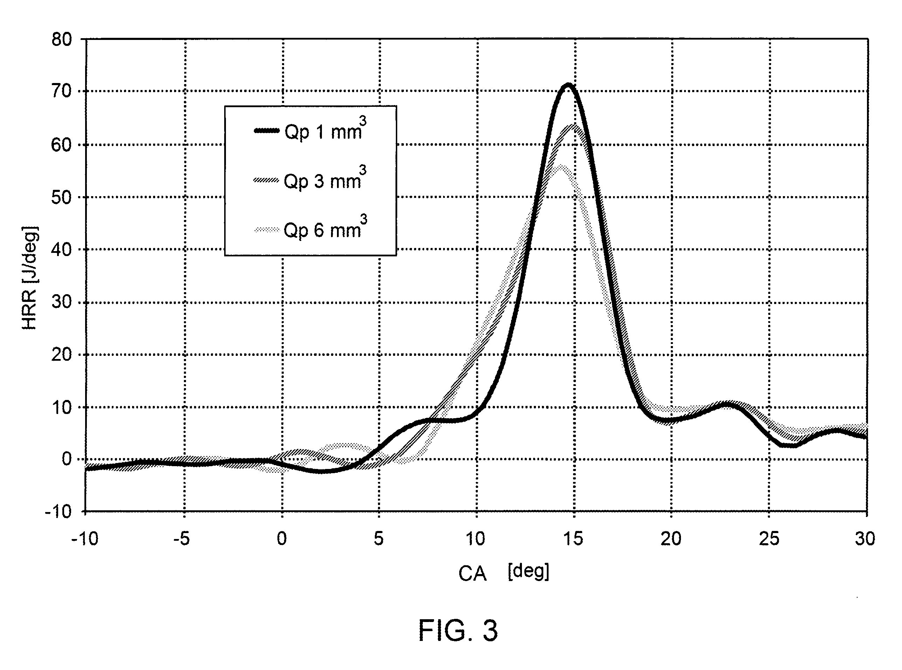

The experimental evidence that has lead to this result can be summarized, by way of example, in the results shown in Figure 3. In this figure, the experimental readings of HRR regarding three combustions can be seen, characterized by the utilization of increasing pilot quantities for the same position of combustion centroid (MFB50%) and the same chemical-physical characteristics of the gases at the moment in which they enter into the chamber (temperature, pressure, quantity of fresh air and quantity of exhaust gas recirculation EGR). In the test under consideration, the time lag between the end of the pilot injection and the start of the main injection, commonly known as "dwell time", or Tp-m, is kept constant and is stabilized at approximately 200us. In these conditions, it can be noted that an increase in the pilot quantity causes a decrease in peak HRR, as shown in Figure 3, where the crank angle CA is shown on the abscissa. This decrease in the HRR peak results in a drop in combustion noise, in a different way from that shown in Figures 2a, 2b and 2c, where the results of tests carried out for the same timing position of the main injection, and hence without providing control of the combustion centroid, are shown; in these conditions (Figures 2a, 2b and 2c), a corresponding decrease in combustion noise for an increase in the pilot quantity is not assured. This is due to the fact that when increasing the pilot quantity, there is an overlap of two effects: on one side, heat release is more divided so as to have lower HRR peaks, a characteristic that tends to reduce combustion noise, while on the other, combustion is made to take place at advanced engine angles, a characteristic that tends to increase combustion noise.

The drop in HRR peak, obtainable by increasing the pilot quantity Qp, with a constant combustion centroid, is due to the change in the way in which the heat releases of the fuel quantities, injected in the pilot and main injection respectively, are summed. The quantity of fuel injected during the pilot injection is in fact able to burn immediately, before the quantity injected with the main injection, without summing itself to the latter and so generating more gradual heat release.

The pilot quantity is not utilized for the purpose of varying the ignition delay of the main injection, a characteristic conventionally requested from the pilot injection, because both quantities are premixed before combustion starts, thanks to the low ignitability characteristics of the gas mixture used in premixed combustion, and because the combustion of the pilot quantity, premixed and with a low temperature, is not able to trigger the start of combustion of the main quantity, nor to change the ignition delay in any appreciable manner, and consequently it does not change the total premixing of the quantity of fuel and the associated pollutant emissions. In these conditions, the pilot quantity becomes a tool able to vary and model the combustion heat release, without altering pollutant emissions.

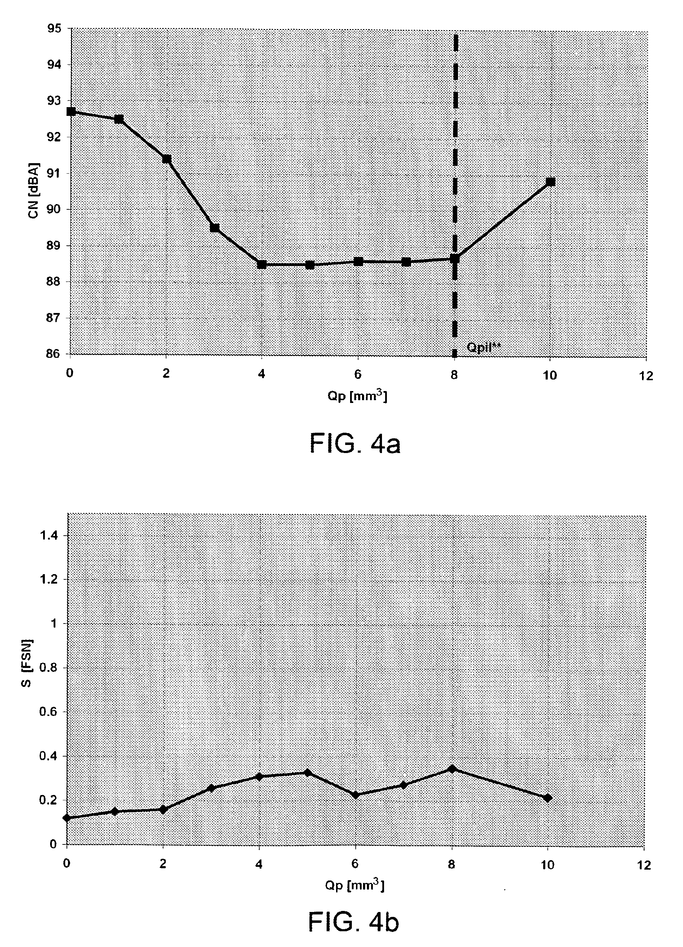

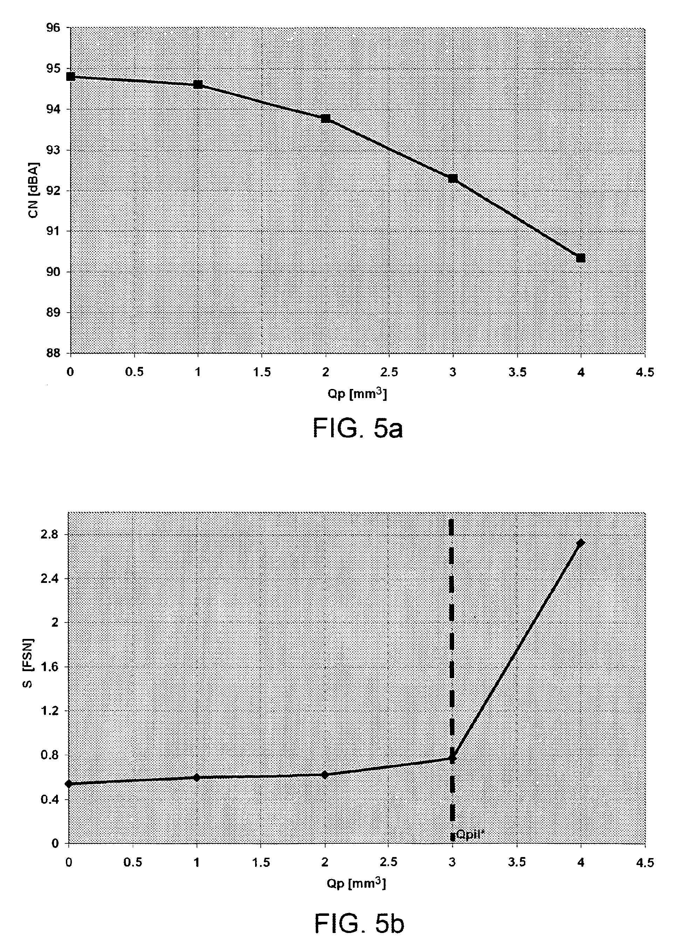

Starting from the previously stated considerations, further experimental tests have been conducted by the Applicant. These are shown, by way of example, in Figures 4a, 4b, 5a and 5b. In particular, pollutant emissions S are shown on the ordinate in Figures 4b and 5b and expressed in FSN (Filter Smoke Number), which is the unit of measurement of an instrument, called a smoke meter and known in the field of diesel testing, through which the opacity of a paper tape impregnated with burnt gases is measured.

In particular, by observing the results shown in Figures 4a and 4b, regarding medium to low load engine running conditions, normally defined by a pair of engine RPM/load values that identify operation of the engine within the so-called engine map, which is the set of all the engine RPM and loads under which the engine can operate, the Applicant has noted that by increasing the quantity of fuel Qp injected during pilot injection, the combustion centroid position being equal, it is possible to reduce combustion noise without increasing smoke emissions, demonstrating the fact that the pilot quantity is not able to alter the ignition delay of the main injection. In fact, if this actually happened, it would entail an increase in smoke emissions not shown in the experimental tests.

The Applicant has also noted that, especially in high load situations, when increasing the pilot quantity Qp beyond a certain limit, referred to by the term Qpil* for convenience, the increasingly intense combustion gradually starts to have an effect on the ignition delay of the main injection, with a consequent decrease in ignition delay and an increase in smoke emissions (Figure 5b).

Similarly, the Applicant has noted that, especially in low load situations, when increasing the pilot quantity Qp beyond a certain limit, referred to by the term Qpil** for convenience, combustion noise exhibits a reversal and starts to increase. This phenomenon is due to the fact that an increasing quantity of fuel burns at more advanced crank angles, in the presence of smaller chamber volumes, and consequently this starts to become the main source of noise in the combustion event.

It is therefore of primary importance to optimize the pilot quantity in order to reduce combustion noise, and avoid exceeding the limit values Qpil* and Qpil**. To this end, the Applicant has noted that it is preferable to set a limit for combustion noise as a function of engine running conditions, based on the demands for comfort required in the particular application to which the engine is destined, for example, by calibrating a combustion-noise limit map as a function of engine RPM and load. Once the above-mentioned map has been established, the described control system varies the pilot quantity in order to obtain the desired combustion noise value, compensating each change in environmental conditions or conditions due to engine usage, for example, during temporary acceleration or deceleration (situations in which engine conditions are not stationary and, most likely, different from the conditions in which the engine was calibrated on the bench), but without ever exceeding the characteristic limit values, Qpil* and Qpil**, beyond which pollutant emissions and combustion noise increase. It should be noted that the above-mentioned limit values Qpil* and Qpil** may change as engine running conditions and environmental conditions change. For example, they could be calibrated in maps or vectors based on engine conditions.

All that has been mentioned above is valid provided that the change in the pilot quantity Qp takes place while keeping constant the combustion centroid position, which can however be altered due to regulation of the pilot quantity itself, or due to any changes in environmental conditions (pressure and temperature of ambient air), or engine control (EGR control, boost, injection pressure, swirl, etc.).

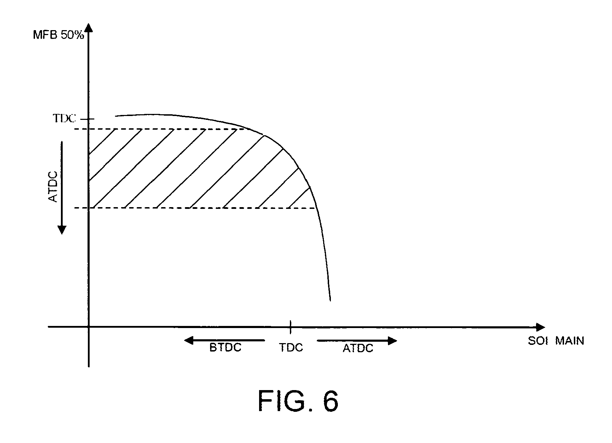

This operation of primary importance is performed by controlling one of the quantities associated with the combustion position itself, such as MFB50% for example, or the centroid of the subtended HRR curve, and acting on the timing position of the injection sequence (pilot plus main), as is shown in Figure 6.

In fact, it can be intuitively deduced that an advance or delay in the injection sequence results in a corresponding advance or delay in combustion with respect to the engine cycle. This combustion position control mechanism is well exemplified by the curve shown in Figure 6. In this figure, it can be noted how the combustion centroid (equivalent to the position of combustion) is easily controlled if positioned in a range of values that starts from a few degrees After Top Dead Centre (ATDC), up to approximately 30-40 degrees ATDC. In fact, it is not possible to make combustion take place much in advance with respect to the engine cycle, because the low pressures inside the cylinder do not allow the fuel to ignite. This limitation strongly depends on engine's compression ratio and the temperature and pressure conditions of the gas mixture taken into the engine. In addition, it is wished to underline that the graph shown in Figure 6 is only of qualitative significance.

Similarly, excessive delays in the position of the combustion centroid may result in misfires or instability, causing large changes in the combustion centroid for minimal displacements of the injection sequence. In consequence, the possibility of changing the position of combustion (quantity that the control acts on) is therefore limited to a range of values and calibrated on maps as a function of engine speed and load.

In Figure 6, the range of values in which it is possible to effectively control the combustion centroid without running the risk of misfires is shown with dashed lines and positioned with reference to Top Dead Centre (TDC). Likewise, by way of example, TDC has been positioned on the abscissa of the graph shown in Figure 6 to indicate that the injection sequence, in this example represented by the start of the main injection current (main start of injection, or main SOI), can take place significantly in advance or significantly delayed with respect to TDC, depending on the requested combustion centroid position.

It should be noted that to position the injection sequence in the engine cycle, it is possible to act indifferently on the moment of starting the pilot injection current "SOI Pilot", or the moment of starting the main injection current "SOI Main", as the injections are time-linked by the period Tp-m, which is kept fixed in the present control strategy, or calibrated if necessary, for example, on a map based on engine RPM and load.

The system forming the subject of the present invention is able to optimize the operation of a diesel engine with premixed charge compression ignition, within the previously described operating limits, by simultaneously controlling two characteristic quantities of the combustion process:
combustion noise and position of the combustion centroid. To this end, two controls are used that work concurrently, respectively guaranteeing the desired combustion noise value (CN or similar quantities) and the combustion centroid (MFB50% or similar quantities).

Both controls act on the method of injecting fuel. Said method of injecting fuel is preferably characterized by a sequence of injections, pilot and main, with one following the other after a preferably fixed time lag Tp-m. In order that said controls are effective and the method of injection is compatible with premixed combustion, the time lag Tp-m between the two injections must be limited, indicatively below 400 microseconds.

Control of combustion noise is achieved by varying the quantity for pilot injection: an increase in the pilot quantity corresponds to a drop in combustion noise.

Control of the combustion centroid is achieved by varying the position of the injection sequence: an advance or delay in the injection sequence corresponds to an advance or delay in the combustion centroid.

More in detail, and with reference to Figure 7, the control system functions via one or more sensors that measure characteristic quantities of the combustion process, from which, by direct measurement or indirect calculation, the following values are obtained:
i) a characteristic quantity for the noise associated with combustion, for example, Combustion Noise (CN), maximum pressure cycle derivate, HRR peak, etc., and
ii) a characteristic quantity for the combustion position in engine cycle, for example, MFB50%, crank angle at which the centroid is obtained for the integral of the area subtended by the HRR curve as a function of the crank angle, etc.

Quantity i) enters control branch "A" (Figure 7), is compared with a reference value and, based on the deviation from the desired value, namely the reference value, a control block (for example, a proportional - integral - derivate (PID) control) calculates the pilot quantity to inject at the successive injection of fuel, modifying the parameter Qp.

Quantity ii) enters control branch "B", is compared with a reference value and, based on the deviation from the desired value, namely the reference value, a control block (for example, a PID control) calculates the position of the injection sequence to be performed at the successive injection of fuel, modifying one of the parameters SOI Pilot or SOI Main.

The two control branches A and B (Figure 7), the first one assigned to controlling combustion noise, the second to controlling the position of the combustion centroid, contribute to generating the injection event of the next engine cycle. The additional parameter that unambiguously defines the injection event, namely the quantity Qmain injected by the main injection, is instead calculated starting from the torque requested from the engine, according to any of the known methodologies.

## Claims

1. An electronic control system (1) configured to closed-loop control fuel combustion in a premixed charge compression ignition (PCCI) diesel engine equipped with an electronically controlled fuel injection system (7) configured to perform a fuel injection sequence in an engine cylinder (8) per engine cycle and comprising at least one pilot fuel injection (P) and a successive main fuel injection (M);
the electronic control system (1) comprising:
• sensor means (2) configured to determine fuel combustion characteristic quantities comprising a quantity indicative of a fuel combustion position in an engine cycle and a quantity indicative of fuel combustion noise; and
• fuel injection control means (3, 4a, 5a, 6a, 4b, 5b, 6b) configured to closed-loop regulate the fuel injection sequence position in the engine cycle and a pilot fuel quantity (Qp) injected during the pilot fuel injection (P) based on the fuel combustion characteristic quantities;
**characterized in that** the fuel injection control means are further configured to regulate:
• the pilot fuel quantity (Qp) to control fuel combustion noise; and
• the fuel injection sequence position in the engine cycle to compensate variations in the fuel combustion position induced by the regulation of the pilot fuel quantity (Qp) or in the environmental or engine control conditions that cause a variation in the characteristics of an engine intake gas mixture, whereby an ignition delay of the main fuel injection (M) is unaffected by the regulation of the pilot fuel quantity (Qp).

2. The electronic control system according to claim 1, wherein the quantity indicative of the fuel combustion noise comprises one of the following quantities:
• maximum in-cylinder pressure derivative;
• fuel combustion noise;
• maximum peak of heat release rate;
and wherein the quantity indicative of the fuel combustion position in the engine cycle comprises one of the following quantities:
• engine crankshaft angle at which a given mass fraction (MFB50%) of fuel injected into an engine cylinder has burnt;
• centroid of heat release rate (HRR).

3. The electronic control system according to claim 1 or 2, wherein the fuel injection control means are further configured to regulate the pilot fuel quantity (Qp) so as to cause the fuel combustion noise to assume target values mapped as a function of engine speed and load.

4. The electronic control system according to any one of the preceding claims, wherein the fuel injection control means are further configured to regulate the fuel injection sequence position in the engine cycle so as to cause the fuel combustion position to assume target values mapped as a function of engine speed and load.

5. The electronic control system according to any one of the preceding claims, wherein the fuel injection control means are further configured to regulate the fuel injection sequence position in the engine cycle by regulating the pilot fuel injection position, while keeping the main fuel injection position constant with respect to the pilot fuel injection position.

6. The electronic control system according to any one of the preceding claims, wherein the fuel injection control means are further configured to regulate the fuel injection sequence position in the engine cycle by regulating the main fuel injection position, while keeping the pilot fuel injection position constant with respect to the main fuel injection position.

7. The electronic control system according to claim 5 or 6, wherein the time lag (Tp-m) between the pilot and main fuel injections is mapped as a function of engine speed and load.

8. The electronic control system according to any one of the preceding claims, wherein the fuel injection control means are further configured to keep the overall fuel quantity (Qp+Qm) injected during the pilot and main fuel injections substantially constant.

9. The electronic control system according to any one of the preceding claims, wherein the fuel injection control means are further configured to closed-loop regulate the pilot fuel quantity (Qp) by performing a number of successive opening and closing cycles of a fuel injector of the electronically controlled fuel injection system (7).

10. The electronic control system according to any one of the preceding claims, wherein the fuel injection control means are further configured to increase the pilot fuel quantity (Qp) to reduce combustion noise.

11. The electronic control system according to claim 10, wherein the fuel injection control means are further configured to increase the pilot fuel quantity (Qp) up to a first limit value (Qpil*) beyond which a further increase in the pilot fuel quantity (Qp) produces an increase in smoke emissions.

12. The electronic control system according to claim 11, wherein the fuel injection control means are further configured to increase the pilot fuel quantity (Qp) up to a second limit value (Qpil**) beyond which a further increase in the pilot fuel quantity (Qp) produces an increase in fuel combustion noise.

13. The electronic control system according to any one of the preceding claims, wherein a main fuel quantity (Qm) injected during the main fuel injection (M) is a function of engine speed and load.

14. An electronically controlled fuel injection system (7) comprising an electronic control system (1) according to any one of the preceding claims.

15. A premixed charge compression ignition (PCCI) diesel engine equipped with an electronically controlled fuel injection system (7) according to claim 14.

## Patentansprüche

1. Elektronisches Regelungssystem (1), das dazu ausgelegt ist, die Verbrennung in einem Dieselmotor mit vorgemischter Kompressionszündung (PCCI) zu regeln, der mit einem elektronisch geregelten Kraftstoff-Einspritzssystem (7) ausgestattet ist, welches dazu ausgelegt ist, pro Motorzyklus eine Kraftstoff-Einspritzabfolge in einem Motorzylinder (8) auszuführen, und welches zumindest eine Kraftstoff-Voreinspritzung (P) und eine anschließende Kraftstoff-Haupteinspritzung (M) aufweist;
wobei das elektronische Regelungssystem (1) folgendes aufweist:
- Sensoreinrichtungen (2), die dazu ausgelegt sind, Werte der Kraftstoff-Verbrennungscharakteristik zu bestimmen, welche einen Wert, der die Kraftstoff Verbrennungsposition in einem Motorzyklus angibt und einen Wert, der das Kraftstoff Verbrennungsgeräusch angibt, aufweisen; und
- Kraftstoff-Einspritzregelungseinrichtungen (3, 4a, 5a, 6a, 4b, 5b, 6b), die dazu ausgelegt sind, die Kraftstoff-Einspritzabfolgepositionen im Motorzyklus und eine Kraftstoff-Voreinspritzmenge (Qp), die während der Kraftstoff Voreinspritzung (P) eingespritzt wird, basierend auf den Werten der Kraftstoff Verbrennungscharakteristik zu regeln;
**dadurch gekennzeichnet,**
**dass** die Kraftstoff-Einspritzregelungseinrichtungen ferner dazu ausgelegt sind, folgendes zu regeln:
- die Kraftstoff Voreinspritzmenge (Qp), um das Kraftstoff Verbrennungsgeräusch zu beeinflussen; und
- die Kraftstoff-Einspritzabfolgepositionen im Motorzyklus, um Schwankungen der Kraftstoff-Einspritzabfolgepositionen zu kompensieren, die durch die Regelung der Kraftstoff-Voreinspritzmenge (Qp) oder die Umgebungs- oder Motorregelungsbedingungen verursacht werden, die eine Schwankung der Charakteristika der angesaugten Gasmischung des Motors verursachen, sodass eine Zündverzögerung der Kraftstoff-Haupteinspritzung (M) durch die Regelung der Kraftstoff-Vorein-spritzmenge (Qp) nicht beeinflusst wird.

2. Elektronisches Regelungssystem nach Anspruch 1,
wobei der Wert, der das Kraftstoff-Verbrennungsgeräusch angibt, eine der folgenden Größen aufweist:
- maximale Ableitung des Zylinderinnendrucks;
- Kraftstoff-Verbrennungsgeräusch;
- maximaler Spitzenwert der Wärmeabgaberate;
und wobei der Wert, der die Kraftstoff-Verbrennungsposition in dem Motorzyklus angibt, einen der folgenden Werte aufweist:
- Winkel der Motorkurbelwelle, bei welcher ein gegebener Kraftstoff-Massenanteil (MFB50%), der in den Motorzylinder eingespeist worden ist, verbrannt ist;
- Schwerpunkt der Wärmeabgaberate (HRR).

3. Elektronisches Regelungssystem nach Anspruch 1 oder 2,
wobei die Kraftstoff-Einspritzregelungseinrichtungen ferner dazu ausgelegt sind, die Kraftstoff-Voreinspritzmenge (Qp) zu regeln, um dafür zu sorgen, dass das Kraftstoff-Verbrennungsgeräusch Zielwerte annimmt, die als Funktion der Motordrehzahl und der Motorlast abgebildet sind.

4. Elektronisches Regelungssystem nach einem der vorhergehenden Ansprüche, wobei die Kraftstoff-Einspritzregelungseinrichtungen ferner dazu ausgelegt sind, die Kraftstoff-Einspritzabfolgepositionen im Motorzyklus zu regulieren, um dafür zu sorgen, dass die Kraftstoff-Verbrennungsposition Zielwerte annimmt, die als Funktion der Motordrehzahl und der Motorlast abgebildet sind.

5. Elektronisches Regelungssystem nach einem der vorhergehenden Ansprüche, wobei die Kraftstoff-Einspritzregelungseinrichtungen ferner dazu ausgelegt sind, die Kraftstoff-Einspritzabfolgepositionen im Motorzyklus durch Regulieren der Kraftstoff-Voreinspritzposition zu regulieren, während die Kraftstoff-Haupteinspritzposition im Hinblick auf die Kraftstoff-Voreinspritzposition konstant gehalten wird.

6. Elektronisches Regelungssystem nach einem der vorhergehenden Ansprüche, wobei die Kraftstoff-Einspritzregelungseinrichtungen ferner dazu ausgelegt sind, die Kraftstoff-Einspritzabfolgepositionen im Motorzyklus durch Regulieren der Kraftstoff-Haupteinspritzposition zu regulieren, während die Kraftstoff-Voreinspritzposition im Hinblick auf die Kraftstoff-Haupteinspritzposition konstant gehalten wird.

7. Elektronisches Regelungssystem nach Anspruch 5 oder 6,
wobei die Zeitverzögerung (Tp-m) zwischen der Kraftstoff Voreinspritzung und der Kraftstoff-Haupteinspritzung als Funktion der Motordrehzahl und der Motorlast abgebildet ist.

8. Elektronisches Regelungssystem nach einem der vorhergehenden Ansprüche, wobei die Kraftstoff-Einspritzregelungseinrichtungen ferner dazu ausgelegt sind, die Kraftstoff-Gesamtmenge (Qp+Qm), die während der Kraftstoff-Voreinspritzung und der Kraftstoff-Haupteinspritzung eingespritzt wird, im wesentlichen konstant zu halten.

9. Elektronisches Regelungssystem nach einem der vorhergehenden Ansprüche, wobei die Kraftstoff-Einspritzregelungseinrichtungen ferner dazu ausgelegt sind, die Kraftstoff Voreinspritzmenge (Qp) durch das Ausführen einer Anzahl aufeinanderfolgender Öffnungs- und Schließzyklen eines Kraftstoffeinspritzers des elektronisch geregelten Kraftstoff-Einspritzssystems (7) zu regeln.

10. Elektronisches Regelungssystem nach einem der vorhergehenden Ansprüche, wobei die Kraftstoff-Einspritzregelungseinrichtungen ferner dazu ausgelegt sind, die Kraftstoff-Voreinspritzmenge (Qp) zu erhöhen, um das Verbrennungsgeräusch zu reduzieren.

11. Elektronisches Regelungssystem nach Anspruch 10,
wobei die Kraftstoff-Einspritzregelungseinrichtungen ferner dazu ausgelegt sind, die Kraftstoff-Voreinspritzmenge (Qp) bis zu einem ersten Grenzwert (Qpil*) zu erhöhen, oberhalb dessen eine weitere Erhöhung der Kraftstoff-Voreinspritzmenge (Qp) einen Anstieg von Rauchemissionen hervorruft.

12. Elektronisches Regelungssystem nach Anspruch 11,
wobei die Kraftstoff-Einspritzregelungseinrichtungen ferner dazu ausgelegt sind, die Kraftstoff-Voreinspritzmenge (Qp) bis zu einem zweiten Grenzwert (Qpil**) zu erhöhen, oberhalb dessen eine weitere Erhöhung der Kraftstoff-Voreinspritzmenge (Qp) einen Anstieg des Kraftstoff-Verbrennungsgeräusches hervorruft.

13. Elektronisches Regelungssystem nach einem der vorhergehenden Ansprüche, wobei eine Kraftstoff-Hauptmenge (Qm), die während einer Kraftstoff-Haupteinspritzung (M) eingespritzt wird, eine Funktion der Motordrehzahl und der Motorlast ist.

14. Elektronisch geregeltes Kraftstoff-Einspritzsystem (7),
welches ein elektronisches Regelungssystem (1) nach einem der vorhergehenden Ansprüche aufweist.

15. Dieselmotor mit vorgemischter Kompressionszündung (PCCI),
welcher mit einem elektronisch geregelten Kraftstoff-Einspritzsystem (7) nach Anspruch 14 ausgestattet ist.

## Revendications

1. Système de commande électronique (1) configuré de façon à commander en boucle fermée la combustion de carburant dans un moteur diesel à allumage par compression à charge prémélangée (PCCI) doté d'un système d'injection de carburant commandé de manière électronique (7) configuré de façon à exécuter une séquence d'injection de carburant dans un cylindre moteur (8) par cycle moteur et comprenant au moins une injection de carburant pilote (P) et une injection de carburant principale successive (M) ;
le système de commande électronique (1) comprenant :
- des moyens formant détecteur (2) configurés de façon à déterminer des quantités caractéristiques de combustion de carburant comprenant une quantité indicative d'une position de combustion de carburant dans un cycle moteur et une quantité indicative d'un bruit de combustion de carburant ; et
- des moyens de commande d'injection de carburant (3, 4a, 5a, 6a, 4b, 5b, 6b) configurés de façon à réguler en boucle fermée la position de la séquence d'injection de carburant dans le cycle moteur et une quantité de carburant pilote (Qp) injectée au cours de l'injection de carburant pilote (P) sur la base des quantités caractéristiques de combustion de carburant ;
**caractérisé en ce que** les moyens de commande d'injection de carburant sont configurés en outre de façon à réguler :
- la quantité de carburant pilote (Qp) de façon à commander le bruit de combustion de carburant ; et
- la position de la séquence d'injection de carburant dans le cycle moteur de façon à compenser des variations de la position de la combustion de carburant induites par la régulation de la quantité d'essence pilote (Qp) ou dans des conditions environnementales ou de commande de moteur qui provoquent une variation des caractéristiques d'un mélange de gaz d'admission moteur, grâce à quoi le retard d'allumage de l'injection de carburant principale (M) n'est pas affecté par la régulation de la quantité de carburant pilote (Qp).

2. Système de commande électronique selon la revendication 1, dans lequel la quantité indicative du bruit de combustion de carburant comprend l'une des quantités suivantes :
- dérivée de la pression dans le cylindre maximum ;
- bruit de combustion de carburant ;
- pic maximum du débit calorifique ;
et dans lequel la quantité indicative de la position de la combustion de carburant dans le cycle moteur comprend l'une des quantités suivantes :
- angle du vilebrequin moteur pour lequel une fraction de masse donnée (MFB 50 %) du carburant injecté dans un cylindre moteur a brûlé ;
- centroïde du débit calorifique (HRR).

3. Système de commande électronique selon la revendication 1 ou la revendication 2, dans lequel les moyens de commande d'injection de carburant sont configurés en outre de façon à réguler la quantité de carburant pilote (Qp) de manière à ce que le bruit de combustion de carburant prenne des valeurs cibles mappées en fonction de la vitesse et de la charge du moteur.

4. Système de commande électronique selon l'une quelconque des revendications précédentes, dans lequel les moyens de commande d'injection de carburant sont configurés en outre de façon à réguler la position de la séquence d'injection de carburant dans le cycle moteur de manière à ce que la position de la combustion de carburant prenne des valeurs cibles mappées en fonction de la vitesse et de la charge du moteur.

5. Système de commande électronique selon l'une quelconque des revendications précédentes, dans lequel les moyens de commande d'injection de carburant sont configurés en outre de façon à réguler la position de la séquence d'injection de carburant dans le cycle moteur en régulant la position de l'injection de carburant pilote, tout en maintenant constante la position de l'injection de carburant principale par rapport à la position de l'injection de carburant pilote.

6. Système de commande électronique selon l'une quelconque des revendications précédentes, dans lequel les moyens de commande d'injection de carburant sont configurés en outre de façon à réguler la position de la séquence d'injection de carburant dans le cycle moteur en régulant la position de l'injection de carburant principale, tout en maintenant constante la position de l'injection de carburant pilote par rapport à la position de l'injection de carburant principale.

7. Système de commande électronique selon la revendication 5 ou la revendication 6, dans lequel le retard (Tp - m) entre les injections de carburant pilote et principale est mappée en fonction de la vitesse et de la charge du moteur.

8. Système de commande électronique selon l'une quelconque des revendications précédentes, dans lequel les moyens de commande d'injection de carburant sont configurés en outre de façon à maintenir sensiblement constante la quantité globale de carburant (Qp + Qm) injectée au cours des injections de carburant pilote et principale.

9. Système de commande électronique selon l'une quelconque des revendications précédentes, dans lequel les moyens de commande d'injection de carburant sont configurés en outre de façon à réguler en boucle fermée la quantité de carburant pilote (Qp) en exécutant un certain nombre de cycles successifs d'ouverture et de fermeture d'un injecteur de carburant du système d'injection de carburant commandé de manière électronique (7).

10. Système de commande électronique selon l'une quelconque des revendications précédentes, dans lequel les moyens de commande d'injection de carburant sont configurés en outre de façon à augmenter la quantité de carburant pilote (Qp) de manière à réduire le bruit de combustion.

11. Système de commande électronique selon la revendication 10, dans lequel les moyens de commande d'injection de carburant sont configurés en outre de façon à augmenter la quantité de carburant pilote (Qp) jusqu'à une première valeur limite (Qpil*) au-delà de laquelle une autre augmentation de la quantité de carburant pilote (Qp) produit une augmentation des émissions de fumée.

12. Système de commande électronique selon la revendication 11, dans lequel les moyens de commande d'injection de carburant sont configurés en outre de façon à augmenter la quantité de carburant pilote (Qp) jusqu'à une seconde valeur limite (Qpil**) au-delà de laquelle une autre augmentation de la quantité de carburant pilote (Qp) produit une augmentation du bruit de combustion de carburant.

13. Système de commande électronique selon l'une quelconque des revendications précédentes, dans lequel une quantité de carburant principale (Qm) injectée au cours de l'injection de carburant principale (M) est fonction de la vitesse et de la charge du moteur.

14. Système d'injection de carburant commandé de manière électronique (7) comprenant un système de commande électronique (1) selon l'une quelconque des revendications précédentes.

15. Moteur diesel à allumage par compression à charge prémélangée (PCCI) doté d'un système d'injection de carburant commandé de manière électronique (7) selon la revendication 14.
